# EUROPÄISCHE PATENTSCHRIFT

(11) **EP 3 091 208 B1**
(45) Veröffentlichungstag und Bekanntmachung des Hinweises auf die Patenterteilung: **04.04.2018**
(21) Anmeldenummer: 16164171.7
(22) Anmeldetag: 07.04.2016
(51) Int. Cl.: F02B 29/04, F28D 7/16, F28F 21/06

(54) **FRISCHLUFTVERSORGUNGSEINRICHTUNG FÜR EINE BRENNKRAFTMASCHINE UND ZUGEHÖRIGES HERSTELLUNGSVERFAHREN**
FRESH AIR SUPPLYING DEVICE FOR AN INTERNAL COMBUSTION ENGINE AND CORRESPONDING MANUFACTURING METHOD
DISPOSITIF D'ALIMENTATION EN AIR FRAIS POUR UN MOTEUR A COMBUSTION INTERNE ET PROCEDE DE FABRICATION CORRESPONDANT

(30) Priorität: 22.04.2015 DE 102015207320
(43) Veröffentlichungstag der Anmeldung: 09.11.2016
(73) Patentinhaber: Mahle International GmbH, 70376 Stuttgart (DE)
(72) Erfinder: Brehler, Melanie, 71642 Ludwigsburg (DE); Bruggesser, Veit, 71157 Hildrizhausen (DE); Eilemann, Andreas, 71729 Erdmannhausen (DE); Isermeyer, Tobias, 74245 Löwenstein (DE); Röschmann, Timm, 71154 Nufringen (DE); Stehlig, Jürgen, 72654 Neckartenzlingen (DE)
(74) Vertreter: BRP Renaud & Partner mbB Rechtsanwälte Patentanwälte Steuerberater

(56) Entgegenhaltungen:
- EP-A1- 0 017 410
- DE-A1-102006 040 851
- DE-A1-102009 050 884
- DE-A1-102012 212 110
- US-A- 5 152 338
- US-A- 5 865 244

## Beschreibung

Die vorliegende Erfindung betrifft eine Frischluftversorgungseinrichtung für eine Brennkraftmaschine, gemäß dem Oberbegriff des Anspruchs 1. Die Erfindung betrifft des Weiteren ein Verfahren zum Herstellen einer solchen Frischluftversorgungseinrichtung.

Frischluftversorgungseinrichtungen dienen der Versorgung einer Brennkraftmaschine mit Frischluft und werden beispielsweise in Kraftfahrzeugen eingesetzt. Zur Effizienzsteigerung der Brennkraftmaschine ist es bekannt, die Brennkraftmaschine aufzuladen, also mit Ladeluft bzw. komprimierter Frischluft zu versorgen. Die Bereitstellung von Ladeluft erfordert gewöhnlich eine Kühlung der Ladeluft, bevor diese zur Brennkraftmaschine gelangt. Zu diesem Zweck werden Frischluftversorgungseinrichtungen mit einem Ladeluftkühler versehen.

Hierbei ist es wünschenswert, die Frischluftfführung mittels eines Gehäuses zu realisieren, das zumindest bereichsweise aus Kunststoff hergestellt ist, da ein solches Gehäuse preiswert herzustellen ist und/oder ein vergleichsweise geringes Gewicht aufweist. Ein solches Gehäuse definiert somit einen Frischluftpfad der Frischluft und weist insbesondere einen Einlass sowie einen Auslass für die Frischluft auf. Für den Ladeluftkühler sind hingegen hohe Wärmeleitfähigkeiten erwünscht, um durch einen entsprechend verbesserten Wärmeaustausch eine bessere Kühlung der Ladeluft zu ermöglichen. Hierzu sind derartige Ladeluftkühler gewöhnlich aus metallischen Materialien hergestellt.

Problematisch dabei ist, einen solchen Ladeluftkühler in das Gehäuse einzubringen und mit dem Gehäuse zu verbinden. Zum Einbringen des Ladeluftkühlers in das Gehäuse kann das Gehäuse eine entsprechende Öffnung aufweisen, durch die der Ladeluftkühler in das Gehäuse eingebracht wird.

Die Verbindung des Gehäuses mit dem Ladeluftkühler wird bei solchen Frischluftversorgungseinrichtungen in der Regel im Bereich einer solchen Öffnung realisiert, indem der Ladeluftkühler zumindest teilweise aus Kunststoff hergestellt oder mit Kunststoff versehen wird, so dass der Ladeluftkühler in diesem Bereich mit dem Gehäuse verschweißt werden kann.

Eine solche Frischluftversorgungseinrichtung ist aus der DE 10 2012 212 110 A1 bekannt. Hierbei ist ein Flansch des Ladeluftkühlers mit Kunststoff versehen, der an einem Rand des Gehäuses anliegt, wobei der Flansch in diesem Randbereich mit dem Gehäuse verschweißt wird.

Die DE 10 2009 050 258 B3 zeigt eine weitere solche Frischluftversorgungseinrichtung, bei der ein kühlmittelführender Kasten des Ladeluftkühlers aus Kunststoff hergestellt ist, so dass der Kasten mit dem Gehäuse verschweißt werden kann.

Aus der DE 10 2006 040 851 A1 ist ein Ladeluftkühler bekannt, der luftführende Strömungskanäle und kältemittelführende Strömungskanäle aufweist. Längsenden der luftführenden Strömungskanäle sind zur Ausbildung von Rohrboden mit Kunststoff umspritzt. Zudem können Seitenwände des Ladeluftkühlers gleichzeitig mit den Rohrböden gefertigt werden.

Die vorliegende Erfindung beschäftigt sich mit dem Problem, für eine Frischluftversorgungseinrichtung sowie für ein zugehöriges Herstellungsverfahren verbesserte oder zumindest andere Ausführungsformen anzugeben, die sich insbesondere durch eine vereinfachte Integration des Ladeluftkühlers in das Gehäuse und/oder durch eine vereinfachte Herstellung auszeichnen.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, ein Gehäuse einer Frischluftversorgungseinrichtung, in dem ein Ladeluftkühler angeordnet ist, zumindest bereichsweise dadurch auszubilden, dass ein Kunststoff zur Ausbildung des Gehäuses an den Ladeluftkühler angespritzt wird. Hierdurch lässt sich eine vereinfachte Herstellung des Gehäuses realisieren. Außerdem sind im Vergleich zu einer gänzlich separaten Herstellung des Gehäuses und einer anschließenden Verbindung mit dem Ladeluftkühler keine oder zumindest reduzierte Toleranzen zu berücksichtigen, da der an den Ladeluftkühler angespritzte Bereich des Gehäuses hierdurch an den Ladeluftkühler angepasst ist. Zudem ist es prinzipiell möglich, auf zusätzliche Verbindungsmittel zwischen dem Ladeluftkühler und dem Gehäuse, insbesondere im angespritztem Bereich, zu verzichten, so dass die Herstellung insgesamt kostengünstiger und vereinfacht wird.

Dem Erfindungsgedanken entsprechend weist die Frischluftversorgungseinrichtung also den Ladeluftkühler sowie das Gehäuse auf, wobei das Gehäuse den Ladeluftkühler umgibt und einen Frischluftpfad der Frischluft definiert, der durch den Ladeluftkühler führt. Der Ladeluftkühler dient zum Kühlen der Frischluft, die einer Brennkraftmaschine, insbesondere in einem Kraftfahrzeug, zugeführt wird. Hierbei verläuft der Frischluftpfad zwischen einem Einlass und einem Auslass des Gehäuses. Erfindungsgemäß ist dabei vorgesehen, dass das Gehäuse zumindest einen Anspritz-Abschnitt aus Kunststoff aufweist, der an den Ladeluftkühler angespritzt ist. Dadurch bildet der Anspritz-Abschnitt zumindest bereichsweise das den Ladeluftkühler umgebende Gehäuse.

Das Gehäuse kann prinzipiell beliebig ausgestaltet sein. Das Gehäuse kann insbesondere in der Art eines frischluftführenden Rohrs ausgestaltet sein. Vorstellbar ist es hierbei, dass das Gehäuse als ein Saugrohr ausgestaltet ist. Dabei kann die Frischluftversorgungseinrichtung als ein Saugmodul ausgebildet sein bzw. ein solches Saugmodul aufweisen. Durch die Anordnung des Ladeluftkühlers im Gehäuse kann die Frischluftversorgungseinrichtung also insbesondere ein Saugrohr bzw. ein Saugmodul mit integriertem Ladeluftkühler sein.

Der Ladeluftkühler weist einen Hohlraum auf, der von einem Seitenteil des Ladeluftkühlers begrenzt ist, wobei innerhalb des Hohlraums kühlmittelführende Rohre angeordnet sind.

Das jeweilige Rohr kann hierbei eine beliebige Form, insbesondere einen beliebigen Querschnitt, aufweisen. Vorstellbar sind beispielsweise Rohre mit einem runden, ovalen, eckigen, insbesondere rechteckigen, Querschnitt.

Erfindungsgemäß ist ein solcher Anspritz-Abschnitt an ein solches Seitenteil des Ladeluftkühlers angespritzt. Das Seitenteil verläuft entlang der Rohre.

Die kühlmittelführenden Rohre dienen dem Zweck, die Frischluft bzw. die Ladeluft zu kühlen. Hierzu ist zwischen den Rohren zumindest ein Strömungsraum ausgebildet, durch den der Frischluftpfad führt, so dass die mittels des Kühlmittels gekühlten Rohre die Frischluft kühlen. Im Strömungsraum, insbesondere zwischen den Rohren, können zur Vergrößerung der Wärmeübertragungsfläche mit der Luft Rippen vorgesehen sein, die von der Luft durchströmbar sind. Die Rippen sind bevorzugt mit zumindest einem solchen Rohr wärmeübertragend verbunden, liegen insbesondere an zumindest an einem solchen Rohr an. Die Rippen können als gewellte, dünne Bleche, insbesondere aus Aluminium oder einer Aluminiumlegierung, ausgebildet sein.

Das Kühlmittel kann ein beliebiges Fluid sein. Insbesondere kann das Kühlmittel Kühlwasser sein, so dass es sich beim Ladeluftkühler um einen wassergekühlten Ladeluftkühler handelt.

Prinzipiell ist es vorstellbar, den Kunststoff unmittelbar an den Ladeluftkühler anzuspritzen, um zumindest einen solchen Anspritz-Abschnitt des Gehäuses herzustellen.

Als vorteilhaft erweisen sich hierbei Ausführungsformen, bei denen der Ladeluftkühler vor dem Anspritzen des Kunststoffs, zumindest im mit Kunststoff anzuspritzendem Bereich, mit einem Haftvermittler versehen wird, wodurch die Haftung des Kunststoffs am Ladeluftkühler verbessert wird.

Alternativ oder zusätzlich ist vorstellbar, die Oberfläche des Ladeluftkühlers in dem entsprechenden Bereich, d.h. insbesondere im Bereich des Seitenteils, aufzurauen, um eine verbesserte Haftung bzw. Verbindung des Kunststoffs am Ladeluftkühler zu ermöglichen.

Erfindungsgemäß weist das Seitenteil einen über den Hohlraum verlängerten Verlängerungsabschnitt auf, auf den der Kunststoff angespritzt wird. Hierdurch ist es insbesondere möglich, dass das Seitenteil außenseitig freiliegt. Dabei können das Seitenteil und der Verlängerungsabschnitt separat ausgebildet und aneinander befestigt sein. Vorstellbar ist es auch, Seitenteil und Verlängerungsabschnitt integral, insbesondere einstückig bzw. materialeinheitlich, auszubilden, insbesondere herzustellen.

Um eine ausreichende Verbindung bzw. Haftung des an den Ladeluftkühler angespritzten Kunststoffs am Ladeluftkühler zu erreichen, ist es alternativ oder zusätzlich möglich, den Ladeluftkühler mit zumindest einer Haltestruktur zu versehen. Die Haltestruktur dient hierbei dem Zweck, den an den Ladeluftkühler angespritzten Kunststoff formschlüssig am Ladeluftkühler zu halten.

Eine solche Haltestruktur kann beliebig ausgestaltet sein. Vorstellbar ist es, dass zumindest eine solche Haltestruktur einen Hinterschnitt für den an den Ladeluftkühler angespritzten Kunststoff bildet. Somit gelangt der Kunststoff beim Anspritzen in den Hinterschnitt, wodurch zwischen dem Hinterschnitt bzw. dem Ladeluftkühler und dem aushärtenden bzw. ausgehärteten Kunststoff eine formschlüssige Verbindung zustande kommt, der die Verbindung zwischen dem Anspritz-Abschnitt und dem Ladeluftkühler verbessert.

Vorstellbar ist es auch, dass eine solche Haltestruktur zumindest einen Durchbruch, etwa in Form einer Bohrung, aufweist, in den der Kunststoff beim Anspritzen gelangt und anschließend aushärtet, wodurch die Verbindung bzw. Haftung des Kunststoffs an den Ladeluftkühler ebenfalls verbessert wird. Solche Durchbrüche können unmittelbar am Ladeluftkühler, beispielsweise an und/oder in einem solchen Seitenteil vorgesehen sein.

Bei anderen Ausführungsformen, die alternativ oder zusätzlich zum Einsatz kommen können, weist die Haltestruktur zumindest eine Zahnstruktur auf oder ist als solche ausgebildet. Die Zahnstruktur weist abwechselnd Zähne und Zahnlücken auf, wobei der Kunststoff beim Anspritzen in die Zahnlücken gelangen und aushärten kann, wodurch die Verbindung zwischen dem Anspritz-Abschnitt und dem Ladeluftkühler verbessert wird.

Prinzipiell können die jeweiligen Zähne der Zahnstruktur eine beliebige Form und/oder Größe aufweisen. Als vorteilhaft erweist es sich hierbei, wenn zumindest ein Zahn der Zahnstruktur als ein Zapfen ausgebildet ist. Vorteilhaft sind auch Varianten, bei denen zumindest ein Zahn auf der einem benachbarten Zahn zugewandten Seite eine gekrümmte, insbesondere konkave bzw. konvexe, Form aufweist. Beim Eindringen des Kunststoffs in die Zahnstruktur bildet dabei der Zahn sowohl entlang der Zahnstruktur als auch geneigt hierzu Hinterschnitte, so dass eine besonders vorteilhafte und stabile Verbindung zwischen dem Kunststoff und der Zahnstruktur bzw. des Ladeluftkühlers erreicht wird.

Selbstverständlich kann das Gehäuse auch mehrere solche, insbesondere voneinander beabstandete, Anspritz-Abschnitte aufweisen, die gleichzeitig oder nacheinander an den Ladeluftkühler angespritzt werden.

Das Herstellen des Gehäuses kann derart realisiert sein, dass das gesamte Gehäuse durch das Anspritzen des Kunststoffs an den Ladeluftkühler hergestellt wird. Das heißt, dass das Gehäuse ausschließlich aus zumindest einem solchen Anspritz-Abschnitt zusammengesetzt bzw. hergestellt sein kann.

Bevorzugt sind Varianten, bei denen das Gehäuse zumindest einen Anschluss-Abschnitt aufweist, der mit wenigstens einem solchen Anspritz-Abschnitt verbunden ist. Somit kann das Gehäuse in "hybrider" Bauweise aus zumindest einem solchen Anspritz-Abschnitt und zumindest einem solchen mit dem Anspritz-Abschnitt verbundenen Anschluss-Abschnitt zusammengesetzt bzw. hergestellt sein. Somit lässt sich eine variable Herstellung des Gehäuses bzw. der Frischluftversorgungseinrichtung realisieren.

Der jeweilige Anschluss-Abschnitt kann aus einem beliebigen Material hergestellt und auf einer beliebigen Art mit zumindest einem solchen Anspritz-Abschnitt verbunden sein. Vorstellbar ist es beispielsweise, dass der jeweilige Anschluss-Abschnitt aus Kunststoff oder aus einem metallischen Material hergestellt ist. Zudem kann der jeweilige Anschluss-Abschnitt mit zumindest einem solchen Anspritz-Abschnitt gefügt, insbesondere verschweißt oder geklebt, sein.

Zumindest ein solcher Anschluss-Abschnitt kann als vorgefertigtes Bestandteil des Gehäuses vorliegen, das im Anschluss an das Anspritzen des Kunststoffs zum Herstellen eines solchen Anspritz-Abschnitts mit dem Anschluss-Abschnitt verbunden wird, um das Gehäuse zumindest bereichsweise auszubilden. Dabei kann der Anschluss-Abschnitt beispielsweise als ein Spritzgussteil vorliegen.

Um die Verbindung zwischen einem solchen Anspritz-Abschnitt und einem solchen Anschluss-Abschnitt zu vereinfachen und/oder zu stabilisieren, kann wenigstens ein solcher Anspritz-Abschnitt mit einer entsprechenden Verbindungsstruktur versehen sein. Die Verbindungsstruktur kann beim Anspritzen an den Ladeluftkühler hergestellt werden. Auch ist es vorstellbar, eine solche Verbindungsstruktur nach dem Anspritzen des Anspritz-Abschnittes am Anspritz-Abschnitt zu versehen bzw. nach dem Anspritzen des Anspritz-Abschnittes an den Ladeluftkühler fertigzustellen.

Die jeweilige Verbindungsstruktur kann beliebig ausgestaltet sein. Vorstellbar ist es beispielsweise, die Verbindungsstruktur mit einem Stift zu versehen oder als einen solchen auszubilden, der in eine zugehörige Öffnung des Anschluss-Abschnittes eingreift. Selbstverständlich ist auch eine umgekehrte Realisierung vorstellbar.

Bevorzugte Varianten sehen vor, dass zumindest ein solcher Anschluss-Abschnitt aus Kunststoff hergestellt ist. Hierdurch können Gehäuse realisiert werden, die insbesondere günstig herzustellen sind und verbesserte Stabilitäten aufweisen. Insbesondere werden hierdurch thermische Spannungen zwischen den Anschluss-Abschnitten und den damit verbundenen Anspritz-Abschnitten vermieden oder zumindest reduziert.

Dabei ist es bevorzugt, wenn zumindest ein solcher Anschluss-Abschnitt mit wenigstens einem solchen Anspritz-Abschnitt verschweißt ist. Durch das Verschweißen ist insbesondere eine stabile und/oder kostengünstige und/oder dichte Verbindung zwischen dem Anschluss-Abschnitt und dem zugehörigen Anspritz-Abschnitt möglich.

Das Zusammensetzen des Gehäuses aus zumindest einem solchen Anspritz-Abschnitt und zumindest einem solchen Anschluss-Abschnitt erlaubt es ferner, dass wenigstens ein solcher Anschluss-Abschnitt vom Ladeluftkühler beabstandet angeordnet ist. Hierdurch wird zwischen dem Anschluss-Abschnitt und dem Ladeluftkühler eine Lücke geschaffen. Eine solche Lücke kann zur Definition des Frischluftpfads dienen. Hierdurch kann die Lücke also von der Frischluft durchströmbar sein.

Weist das Gehäuse zumindest zwei solche Anspritz-Abschnitte auf, so ist es vorstellbar, dass wenigstens zwei der Anspritz-Abschnitte in zeitlich nacheinander folgenden Spritzvorgängen an den Ladeluftkühler angespritzt werden.

Vorstellbar ist es auch, zumindest zwei solche, wenigstens bereichsweise voneinander beabstandete, Anspritz-Abschnitte in einem Arbeitsgang, insbesondere gleichzeitig, an den Ladeluftkühler anzuspritzen.

Weist das Gehäuse zumindest einen solchen Anschluss-Abschnitt auf, so kann der Anschluss-Abschnitt mit wenigstens einem solchen Anspritz-Abschnitt verbunden werden, wenn bereits sämtliche Anschluss-Abschnitte hergestellt sind. Vorstellbar ist es auch, zumindest einen solchen Anschluss-Abschnitt zwischen den nacheinander folgenden Spritzvorgängen zum Herstellen unterschiedlicher Anschluss-Abschnitte mit einem solchen Anspritz-Abschnitt zu verbinden. Hierdurch ist es insbesondere möglich, eine verbesserte Anpassung der mit dem Anschluss-Abschnitt verbundenen Anspritz-Abschnitte mit dem Anschluss-Abschnitt zu erreichen.

Der Kunststoff kann prinzipiell beliebig gewählt sein, sofern sich der Kunststoff zum Einsatz in der Frischluftversorgungseinrichtung eignet und sich insbesondere an den Ladeluftkühler anspritzen lässt.

Der Kunststoff kann beispielsweise ein Thermoplast sein, dessen Verformungstemperatur oberhalb einer Betriebstemperatur der Frischluftversorgungseinrichtung liegt. Je nach Position sowie Auslegung der Frischluftversorgungseinrichtung kann die Betriebstemperatur variieren, wobei der thermoplastische Kunststoff entsprechend anzupassen ist. Die Betriebstemperatur kann insbesondere zwischen 60° C und 140°C liegen. Der thermoplastische Kunststoff ist h insbesondere glasfaserverstärkt. Alternativ oder zusätzlich kann der thermoplastische Kunststoff schweißbar sein. Der thermoplastische Kunststoff ist beispielsweise PA 6 GF30 bzw. PA 66 GF 30.

Denkbar sind auch Ausführungsformen, bei denen der Kunststoff ein Duroplast ist. Duroplaste haben den Vorteil, auch höheren Temperaturen ohne wesentliche Festigkeitsverluste und/oder Formänderungen standzuhalten. Als Duroplast kommen insbesondere Phenolharze zum Einsatz. Der Duroplast kann eine Füllung, beispielsweise mit Glasfasern, enthalten.

Bei vorteilhaften Varianten kommt als Kunststoff ein thermoplastisches Elastomer bzw. ein Elastoplast zum Einsatz. Der thermoplastische Elastomere erlaubt dabei einen Ausgleich von Formänderungen des Ladeluftkühlers bzw. des Gehäuses, insbesondere von thermisch bedingten Formänderungen, so dass insbesondere Beschädigungen und/oder durch Formänderungen verursachte Lücken oder Leckagen vermieden oder zumindest reduziert werden.

Selbstverständlich kann der jeweilige Anspritz-Abschnitt eine Kombination von solchen Kunststoffen aufweisen. Auch können unterschiedliche Anspritz-Abschnitte verschiedene solche Kunststoffe aufweisen.

Vorstellbar ist es auch, das Gehäuse auch im Übrigen zumindest teilweise aus einem solchen Kunststoff bzw. Kunststoffgemisch herzustellen, wobei sich diese Kunststoffe von den Kunststoffen der Anspritz-Abschnitte unterscheiden oder diesen entsprechen können. Insbesondere kann ein solcher Anschluss-Abschnitt aus einem solchen Kunststoff hergestellt sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine stark vereinfachte, schaltplanartige Darstellung eines Kraftfahrzeugs,
- Fig. 2: eine räumliche Darstellung eines Ladeluftkühlers,
- Fig. 3 und 4: Querschnitte durch eine Frischluftversorgungseinrichtung, jeweils bei einem anderen Ausführungsbeispiel,
- Fig. 5 a, b: Querschnitte durch einen Anspritz-Abschnitt bei unterschiedlichen Ausführungsbeispielen,
- Fig. 6: den Querschnitt aus den Fig. 3 und 4 bei einem nicht erfindungsgemäßenAusführungsbeispiel,
- Fig. 7: eine räumliche Ansicht eines Ladeluftkühlers bei einem weiteren Ausführungsbeispiel,
- Fig. 8: eine räumliche Ansicht der Frischluftversorgungseinrichtung,
- Fig. 9: eine räumliche Ansicht der Frischluftversorgungseinrichtung, teilweise im Schnitt, bei einem weiteren Ausführungsbeispiel.

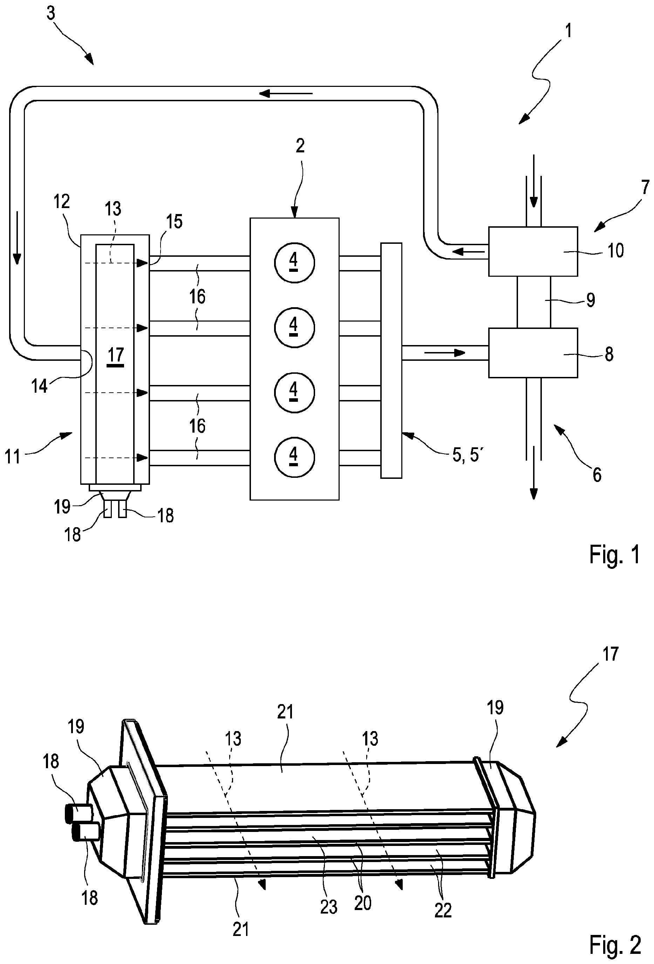

In Fig. 1 ist ein Kraftfahrzeug 1 dargestellt, das eine Brennkraftmaschine 2 aufweist. Zum Betreiben der Brennkraftmaschine 2 ist Frischluft notwendig, die der Brennkraftmaschine 2 über eine Frischluftanlage 3 zugeführt wird. Die Brennkraftmaschine 2 weist eine Vielzahl von Brennräumen 4 auf, wobei im gezeigten Beispiel vier solche Brennräume 4 dargestellt sind. Im Betrieb der Brennkraftmaschinen 2 entsteht in den Brennräumen 4 Abgas, das vom jeweiligen Brennraum 4 mittels eines Abgassammlers 5, beispielsweise eines Abgaskrümmers 5' gesammelt und über eine Abgasanlage 6 abgeführt wird. Das Kraftfahrzeug 1 weist einen Abgasturbolader 7 auf, der in der Abgasanlage 6 derart eingebunden ist, dass ein Turbinenrad 8 des Abgasturboladers 7 vom Abgas beaufschlagt und angetrieben wird. Das Turbinenrad 8 des Abgasturboladers 7 ist über eine Welle 9 mit einem Verdichterrad 10 antriebsverbunden, das in der Frischluftanlage 3 eingebunden ist. Hierdurch wird der Brennkraftmaschine 2 zuzuführende Frischluft aufgeladen.

Die aufgeladene Frischluft gelangt zu einer Frischluftversorgungseinrichtung 11. Die Frischluftversorgungseinrichtung 11 weist ein Gehäuse 12 auf, das einen Frischluftpfad 13 der Frischluft definiert. Das Gehäuse 12 weist einen Einlass 14 zum Einlassen der Frischluft in das Gehäuse 12 sowie zumindest einen Auslass 15 zum Auslassen der Frischluft zur Brennkraftmaschine 2 auf. Hierbei ist dem jeweiligen Brennraum 4 eine separate Leitung 16 zugeordnet, das die Frischluft zu den Brennräumen 4 führt.

Innerhalb des Gehäuses 12 ist ein Ladeluftkühler 17 angeordnet, der vom Gehäuse 12 umgeben ist, wobei der Frischluftpfad 13 zum Kühlen der Frischluft durch den Ladeluftkühler 17 führt. Das Kühlen der Frischluft mit Hilfe des Ladeluftkühlers 17 erfolgt über ein nicht gezeigtes Kühlmittel, insbesondere Kühlwasser, das über Anschlüsse 18 in den Ladeluftkühler 17 eingebracht bzw. davon weggeführt wird.

Ein solcher Ladeluftkühler 17 ist in Fig. 2 gezeigt. Der Ladeluftkühler 17 weist zwei gegenüberliegende Kästen 19 auf, wobei die Anschlüsse 18 an einem der Kästen 19 vorgesehen sind. Zwischen den Kästen 19 verlaufen im Wesentlichen parallel und voneinander beabstandet Kühlrohre 20 oder kurz Rohre 20. Die Rohre 20 sind in einem Hohlraum 23 angeordnet, der von einem Seitenteil 21 des Ladeluftkühlers 17 begrenzt ist, das entlang den Rohren 20 verläuft. Die Rohre 20 führen das Kühlmittel, wobei die Kästen 19 dazu dienen, das Kühlmittel zwischen den Rohren 20 zu verteilen bzw. das aus den Rohren 20 strömende Kühlmittel zu sammeln. Durch die beabstandete Anordnung der Rohre 20 entsteht zwischen den Rohren 20 ein Strömungsraum 22, durch den der Frischluftpfad 13 führt. Hierdurch findet ein Wärmeaustausch zwischen der Frischluft und den Rohren 20 statt, wodurch die Frischluft gekühlt wird.

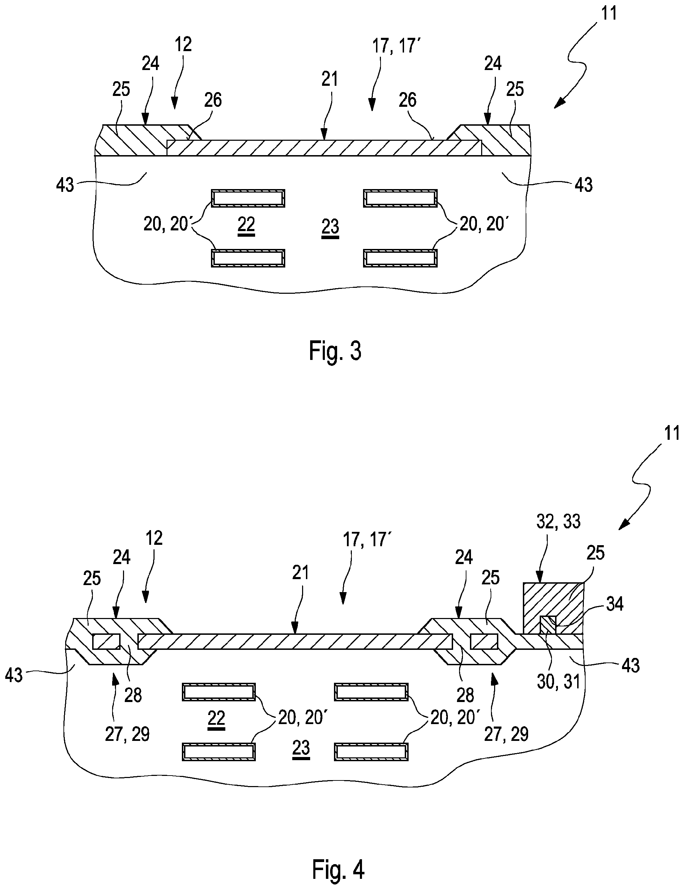

Fig. 3 zeigt einen Querschnitt durch die Frischluftversorgungseinrichtung 11. Dabei ist zunächst erkennbar, dass die Rohre 20 als ein Bündel von Flachrohren 20' ausgestaltet sind, so dass der Ladeluftkühler 17 in der Art eines Rohrbündelkühlers 17' ausgebildet ist. Das Gehäuse 12 der Frischluftversorgungseinrichtung 11 ist derart realisiert, dass zumindest ein Anspritz-Abschnitt 24 des Gehäuses 12 an den Ladeluftkühler 17 angespritzt ist. Hierbei ist der jeweilige Anspritz-Abschnitt 24 aus Kunststoff hergestellt. Dementsprechend wird der Ladeluftkühler 17 zum Herstellen des jeweiligen Anspritz-Abschnitts 24 mit Kunststoff 25 angespritzt.

Bei dem in Fig. 3 gezeigten Ausführungsbeispiel sind zwei solche Anspritz-Abschnitte 24 zu sehen, die voneinander beabstandet sind und jeweils an das Seitenteil 21 des Ladeluftkühlers 17 angespritzt sind. Das Anspritzen des Seitenteils 21 erfolgt im gezeigten Querschnitt randseitig, derart, dass der mittige Bereich des Seitenteils 21 freiliegt.

Um eine verbesserte Haftung des Kunststoffs 25 am Ladeluftkühler 17, d.h. vorliegend an das Seitenteil 21, zu erreichen, wird der Ladeluftkühler 17, insbesondere das Seitenteil 21, zumindest in den Bereich, an den der Kunststoff 25 angespritzt wird, mit einem Haftvermittler 26 versehen, bevor der Kunststoff 25 an den Ladeluftkühler 17 angespritzt wird. Alternativ oder zusätzlich ist es vorstellbar, den Ladeluftkühler 17, insbesondere das Seitenteil 21, aufzurauen, um eine bessere Haftung des Kunststoffs 25 am Ladeluftkühler 17 zu erreichen.

Das in Fig. 4 gezeigte Ausführungsbeispiel unterscheidet sich von dem in Fig. 3 gezeigten Ausführungsbeispiel insbesondere dadurch, dass das Seitenteil 21 eine Haltestruktur 27 aufweist. Die Haltestruktur 27 dient dem Zweck, den an den Ladeluftkühler 17, d.h. an das Seitenteil 21, angespritzten Kunststoff 25 und somit den jeweiligen Anspritz-Abschnitt 24 formschlüssig am Ladeluftkühler 21 zu halten. Bei dem in Fig. 3 gezeigten Ausführungsbeispiel ist die Haltestruktur 27 durch Durchbrüche 28 im Seitenteil 21 des Ladeluftkühlers 17 realisiert. Hierdurch kann der Kunststoff 25 während dem Spritzvorgang durch die Durchbrüche 28 strömen. Somit sammelt sich Kunststoff 25 beim Anspritzen des Seitenteils 21 von der von den Rohren 20 abgewandten Seite auch auf der den Rohren 20 zugewandten Seite. Beim Aushärten des Kunststoffs 25 bildet die Haltestruktur 27 bzw. bilden die Durchbrüche 28 somit einen Hinterschnitt 29, wodurch die Verbindung zwischen dem Ladeluftkühler 17 und dem jeweiligen Anspritz-Abschnitt 24 und folglich mit dem Gehäuse 12 verstärkt, insbesondere stabilisiert, wird.

In Fig. 4 ist ferner erkennbar, dass einer der Anspritz-Abschnitte 24 eine Verbindungsstruktur 30 aufweist, die vorliegend in der Art eines Stifts 31 realisiert ist. Die Verbindungsstruktur 30 ist auf der vom Hohlraum 23 bzw. auf der von den Rohren 20 abgewandten Seite des zugehörigen Anspritz-Abschnittes 24 angeordnet.

Die Verbindungsstruktur 30 dient dem Zweck, einen Anschluss-Abschnitt 32 des Gehäuses 12 mit dem zugehörigen Anspritz-Abschnitt 24 zu verbinden. Der Anschluss-Abschnitt 32 ist im gezeigten Beispiel aus Kunststoff 25 hergestellt und vorgefertigt und liegt beispielsweise als ein Spritzgussteil 33 vor. Die Verbindungsstruktur 30 am Anspritz-Abschnitt 24 wirkt hierbei mit einer zugehörigen, komplementären Verbindungskontur 34 am Anschluss-Abschnitt 32 zusammen. Der Anschluss-Abschnitt 32 und der zugehörige Anspritz-Abschnitt 24 können zudem zusätzlich miteinander verbunden, insbesondere miteinander verschweißt, sein.

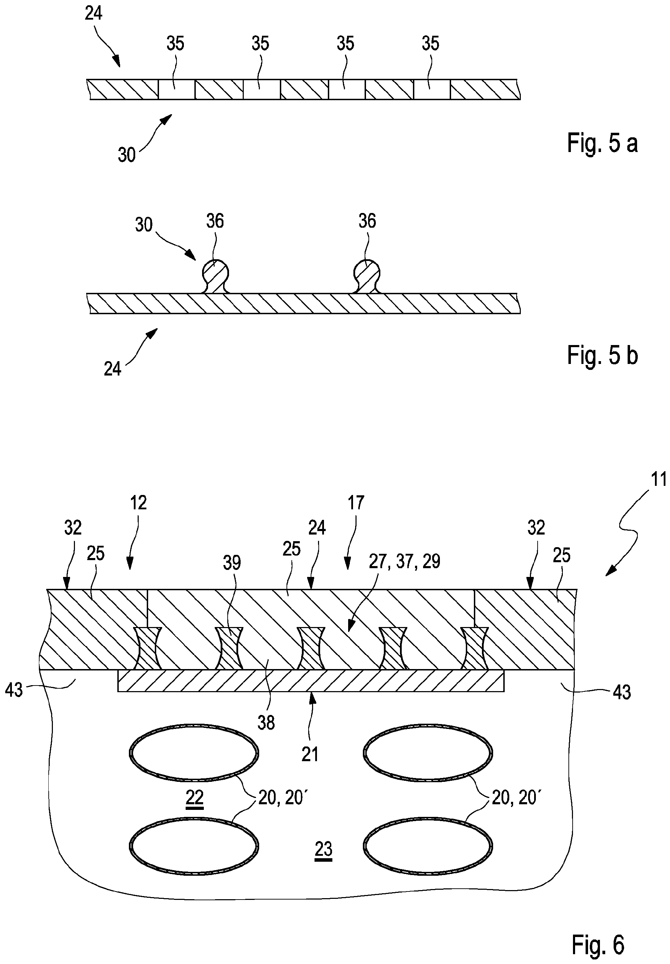

In den Fig. 5a und 5b sind Anspritz-Abschnitte 24 mit alternativen Verbindungsstrukturen 30 dargestellt. Während Fig. 5a eine solche Verbindungsstruktur 30 zeigt, die eine Mehrzahl von Löchern 35 im zugehörigen Anspritz-Abschnitt 24 aufweist, zeigt Fig. 5b eine solche Verbindungsstruktur 30, die eine Anzahl von Wülste 36, die vom zugehörigen Anspritz-Abschnitt 24 abstehen.

Bei den in den Figuren 1 bis 5 gezeigten Beispielen weist das jeweilige Rohr 20 einen rechteckigen Querschnitt auf. Bei allen vorstehend erläuterten und nachfolgend zu erläuterten Beispielen kann das jeweilige Rohr 20 auch einen beliebigen anderen, beispielsweise eckigen, ovalen oder runden, Querschnitt aufweisen.

Grundsätzlich ist es auch möglich, zumindest einen solchen Anschluss-Abschnitt 32 mit wenigstens einem solchen Anspritz-Abschnitt 24 ohne eine solche Verbindungsstruktur 30 zu verbinden.

Fig. 6 zeigt ein solches nicht erfindungsgemäßes Ausführungsbeispiel. Dabei ist zu erkennen, dass die Rohre 20 im Vergleich zu den in den Fig. 3 und 4 gezeigten Ausführungsbeispielen keine rechteckigen Querschnitt, sondern einen ovalen Querschnitt aufweisen.

Zudem weist der Ladeluftkühler 17 an der vom Hohlraum 23 abgewandten Seite des Seitenteils 21 eine solche Haltestruktur 27 auf, die eine Zahnstruktur 37 aufweist bzw. als eine solche Zahnstruktur 37 ausgebildet ist. Die Zahnstruktur 37 weist eine Anzahl von durch Zahnlücken 38 beabstandeten Zähne 39 auf. Beim Anspritzen des Kunststoffs 25 an das Seitenteil 21 gelangt Kunststoff 25 in die Zahnlücken 38 und somit in die Zahnstruktur 37. Hierdurch entsteht beim Aushärten des Kunststoffs 25 eine formschlüssige Verbindung zwischen der Zahnstruktur 37 und dem Anspritz-Abschnitt 24. Da die Zahnstruktur 37 am Seitenteil 21 fest fixiert, insbesondere integral daran ausgeformt ist, kommt es hierdurch zu einer festen, stabilen Verbindung zwischen dem Anspritz-Abschnitt 24 und dem Ladeluftkühler 17.

In Fig. 6 ist ferner zu erkennen, dass die Zähne 39 der Zahnstruktur 37 in Richtung der benachbarten Zähne 39 konkav bzw. konvex und somit gekrümmt ausgebildet sind. Hierdurch entsteht eine stabilere Verbindung zwischen der Zahnstruktur 37 und dem Anspritz-Abschnitt 24. Insbesondere wird hierdurch die Wirkung der Zahnstruktur 37 hinsichtlich eines Hinterschnitts 29 erweitert.

Beim in Fig. 6 gezeigten Beispiel grenzt der Anspritz-Abschnitt 24 an gegenüberliegenden Seiten jeweils an einem solchen Anschluss-Abschnitt 32 an. Dabei ist der jeweilige Anschluss-Abschnitt 32 aus Kunststoff 25 hergestellt und mit dem Anspritz-Abschnitt 24 verschweißt. Dabei sind die Anschlussabschnitte 32 zumindest bereichsweise vom Ladeluftkühler 17 beabstandet angeordnet.

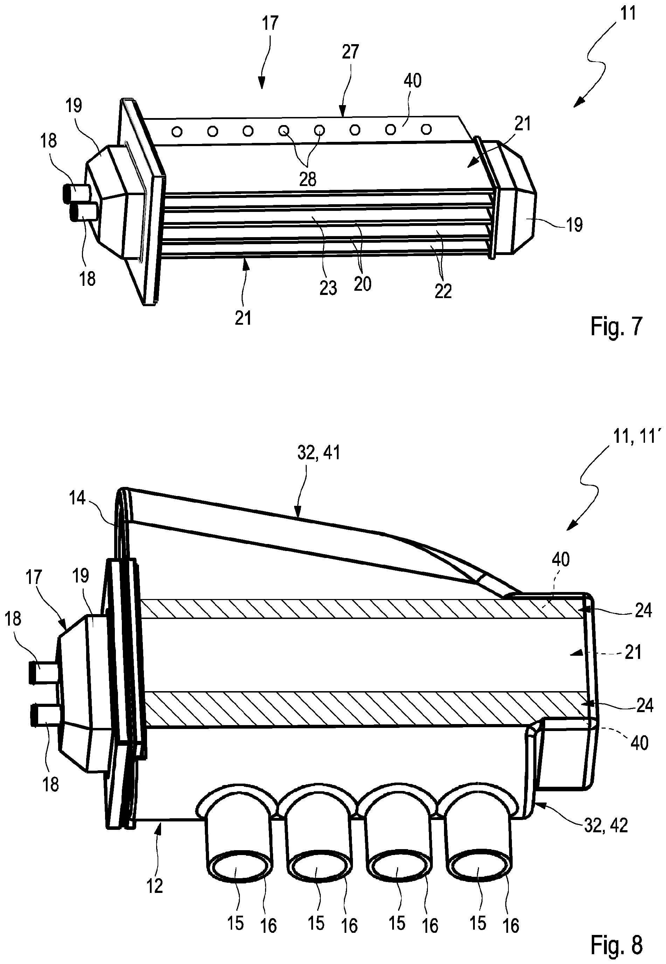

In Fig. 7 ist ein weiteres Ausführungsbeispiel der Frischluftanlage 11, insbesondere des Ladeluftkühlers 17 gezeigt. Dabei ist zu erkennen, dass das Seitenteil 21 eine über den Bereich der Rohre 20 verlängerten Verlängerungsabschnitt 40 aufweist. Der Verlängerungsabschnitt 40 steht somit vom Seitenteil 21 ab. Vorstellbar ist es insbesondere, den Verlängerungsabschnitt 40 und das Seitenteil 21 integral auszubilden. Das heißt insbesondere, dass das Seitenteil 21 und der Verlängerungsabschnitt 40 keine separate Bestandteile sind. Dabei können das Seitenteil 21 und der Verlängerungsabschnitt 40 einstückig, insbesondere materialeinheitlich, ausgebildet sein. Der Verlängerungsabschnitt 40 wird hierbei mit Kunststoff 25 angespritzt, um zumindest einen solchen Anspritz-Abschnitt 24 (in Fig. 7 nicht gezeigt) herzustellen. Hierbei ist der Verlängerungsabschnitt 40 mit einer solchen Haltestruktur 27 versehen, die eine Vielzahl von solchen Durchbrüchen 28 aufweist.

Fig. 8 zeigt die räumliche Ansicht einer solchen Frischluftversorgungseinrichtung 11, die als Saugmodul 11' mit integriertem Ladeluftkühler 17 realisiert ist. Dabei umgibt das Gehäuse 12 den Ladeluftkühler 17, wobei der Kasten 19 des Ladeluftkühlers 17 mit den Anschlüssen 18 seitlich aus dem Gehäuse 12 herausragt. Das Gehäuse 12 weist einen solchen Einlass 14 sowie vier solche Auslässe 15 auf. Der jeweilige Auslass 15 ist an einer solchen Leitung 16 vorgesehen. Das Gehäuse 12 weist mehrere solche Anspritz-Abschnitte 24 auf, die an den Ladeluftkühler 17 angespritzt sind. Das Gehäuse 12 weist ferner mehrere solche Anschluss-Abschnitte 32 auf, die jeweils mit wenigstens einem solchen Anspritz-Abschnitt 34 verbunden, insbesondere verschweißt, sind. Im gezeigten Beispiel sind im Bereich des oberen, nicht sichtbaren Seitenteils 21 des Ladeluftkühlers 17 an quer zur Verbindungsrichtung der Kästen 19 gegenüberliegenden Endbereichen, insbesondere an solchen Verlängerungsabschnitten 40, zwei solche Anspritz-Abschnitte 24 an das Seitenteil 21 angespritzt. Entsprechendes gilt für das auf der abgewandten Seite angeordnete Seitenteil 21, an dem ebenfalls in äquivalenter Weise zwei Anspritz-Abschnitte 24 vorgesehen sind. Die jeweils am gleichen Rand der Seitenteile 21 vorgesehenen Anspritz-Abschnitte 24 sind mit einem solchen Anschluss-Abschnitt 32 verbunden, insbesondere verschweißt. Dabei ist einer dieser Anschluss-Abschnitte 32 als eine Einlasseinheit 41 ausgestaltet, welche den Einlass 14 des Gehäuses 12 aufweist, während der andere Anschluss-Abschnitt 32 als eine Auslasseinheit 42 ausgestaltet ist, welche die Auslässe 15 des Gehäuses 12 aufweist. Da, wie auch in Fig. 6 dargestellt, die Anschluss-Abschnitte 32 zumindest teilweise vom Ladeluftkühler 17 beabstandet angeordnet sind, sind zwischen den Anschluss-Abschnitten 32 und dem Ladeluftkühler 17 Lücken 43 angeordnet. Diese Lücken 43 können hierbei der Strömung der Frischluft bzw. der Definition des Frischluftpfads 13 dienen.

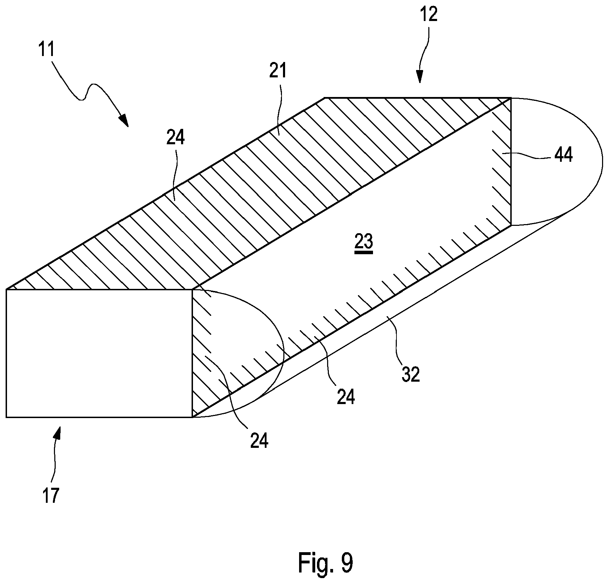

Fig. 9 zeigt ein weiteres Ausführungsbeispiel der Frischluftversorgungseinrichtung 11. Hierbei ist der Anschluss-Abschnitt 32 des Gehäuses 12 des besseren Verständnisses wegen transparent dargestellt. Es ist zu erkennen, dass der Ladeluftkühler 17 außer am vom Hohlraum 23 abgewandten Seite des Seitenteils 21 auch an einem den Hohlraum 23 randseitig umrandenden Rand 44 geschlossen mit zumindest einem solchen Anspritz-Abschnitt 24 versehen ist. Hierdurch kann insbesondere eine stabilere Ausgestaltung des Gehäuses 12 erreicht werden, da der zugehörige Anschluss-Abschnitt 32 über eine größere Fläche mit den Anschluss-Abschnitten 24 bzw. mit mehreren Anschluss-Abschnitten 24 verbunden ist.

Dabei ist es vorstellbar, zunächst die mit der Einlasseinheit 41 zu verbindenden Anspritz-Abschnitte 24 an den Ladeluftkühler 17 anzuspritzen und die Einlasseinheit 41 mit diesen Anspritz-Abschnitten 24 zu verbinden und anschließend die mit der Auslasseinheit 42 zu verbindenden Anspritz-Abschnitte 24 an den Ladeluftkühler 17 anzuspritzen und die Auslasseinheit 42 mit diesen Anspritz-Abschnitten 24 zu verbinden. Selbstverständlich ist auch eine umgekehrte Reihenfolge vorstellbar.

## Patentansprüche

1. Frischluftversorgungseinrichtung (11) für eine Brennkraftmaschine (2), insbesondere eines Kraftfahrzeugs (1),
- mit einem Ladeluftkühler (17) zum Kühlen der Frischluft, durch den ein Frischluftpfad (13) der Frischluft führt,
- mit einem Gehäuse (12), das den Ladeluftkühler (17) umgibt und den Frischluftpfad (13) definiert,
- wobei der Frischluftpfad (13) zwischen einem Einlass (14) und einem Auslass (15) des Gehäuses (12) verläuft,
- wobei das Gehäuse (12) zumindest in einem Anspritz-Abschnitt (24) aus Kunststoff (25) hergestellt ist, der an den Ladeluftkühler (17) angespritzt ist,
- wobei der Ladeluftkühler (17) eine Vielzahl von kühlmittelführenden Rohren (20) aufweist, die in einem von einem Seitenteil (21) des Ladeluftkühlers (17) begrenzten Hohlraum (23) angeordnet sind, wobei das Seitenteil (21) entlang der Rohre (20) verläuft,
**dadurch gekennzeichnet,**
**dass** das Seitenteil (21) einen über den Bereich der Rohre (20) verlängerten Verlängerungs-Abschnitt (40) aufweist, auf den ein solcher Anspritz-Abschnitt (24) angespritzt ist.

2. Frischluftversorgungseinrichtung nach Anspruch 1,
**dadurch gekennzeichnet,**
**dass** der Ladeluftkühler (17) zumindest eine Haltestruktur (27) zum formschlüssigen Halten des an den Ladeluftkühler (17) angespritzen Anspritz-Abschnitts (24) an den Ladeluftkühler (17) aufweist.

3. Frischluftversorgungseinrichtung nach Anspruch 2,
**dadurch gekennzeichnet,**
**dass** zumindest eine solche Haltestruktur (27) einen Hinterschnitt (29) bildet.

4. Frischluftversorgungseinrichtung nach Anspruch 2 oder 3,
**dadurch gekennzeichnet,**
**dass** zumindest eine solche Haltestruktur (27) als eine Zahnstruktur (37) ausgebildet ist.

5. Frischluftversorgungseinrichtung nach einem der Ansprüche 1 bis 4,
**dadurch gekennzeichnet,**
**dass** das Gehäuse (12) zumindest einen Anschluss-Abschnitt (32) aufweist, der mit zumindest einem solchen Anspritz-Abschnitt (24) verbunden ist.

6. Frischluftversorgungseinrichtung nach Anspruch 5,
**dadurch gekennzeichnet,**
**dass** zumindest ein solcher Anspritz-Abschnitt (24) eine Verbindungsstruktur (30) zum Verbinden der Anspritz-Abschnitts (24) mit wenigstens einem solchen Anschluss-Abschnitt (32) aufweist.

7. Frischluftversorgungseinrichtung nach Anspruch 5 oder 6,
**dadurch gekennzeichnet,**
**dass** zumindest ein solcher Anschluss-Abschnitt (32) zur Ausbildung einer Lücke (43) beabstandet zum Ladeluftkühler (17) angeordnet ist.

8. Frischluftversorgungseinrichtung nach einem der Ansprüche 1 bis 7,
**dadurch gekennzeichnet,**
**dass** der Kunststoff (25) zumindest eines solches Anspritz-Abschnitts (24) ein thermoplastisches Elastomer ist.

9. Frischluftversorgungseinrichtung nach einem der Ansprüche 1 bis 8,
**dadurch gekennzeichnet,**
**dass** der Kunststoff (25) zumindest eines solches Anspritz-Abschnitts (24) ein Thermoplast oder ein Duroplast ist.

10. Verfahren zum Herstellen einer Frischluftversorgungseinrichtung (11) nach einem der Ansprüche 1 bis 9, wobei ein solcher Anspritz-Abschnitt (24) durch Anspritzen von Kunststoff (25) auf den Verlängerungs-Abschnitt (40) des Seitenteils (21) hergestellt wird.

11. Verfahren nach Anspruch 10,
**dadurch gekennzeichnet,**
**dass** zwei solche Anspritz-Abschnitte (24) in nacheinander folgenden Spritzvorgängen an den Ladeluftkühler (17) angespritzt werden.

12. Verfahren nach Anspruch 11,
**dadurch gekennzeichnet,**
**dass** ein solcher Anschluss-Abschnitt (32) nach dem Anspritzen eines der Anspritz-Abschnitte (24) mit dem Anspritz-Abschnitt (24) verbunden wird.

13. Verfahren nach Anspruch 11 oder 12,
**dadurch gekennzeichnet,**
**dass** wenigstens ein solcher Anschluss-Abschnitt (32) zwischen den Spritzvorgängen mit wenigstens einem solchen Anspritz-Abschnitt (24) verbunden wird.

## Claims

1. Fresh air supply device (11) for an internal combustion engine (2), in particular a motor vehicle (1),
- with a charge air cooler (17) to cool the fresh air through which a fresh air path (13) of fresh air leads,
- with a housing (12) which surrounds the charge air cooler (17) and defines the fresh air path (13),
- wherein the fresh air path (13) runs between an inlet (14) and an outlet (15) of the housing (12),
- wherein the housing (12) is produced from plastic (25) at least in an injection moulded section (24), said plastic being injection moulded on the charge air cooler (17),
- wherein the charge air cooler (17) has a plurality of coolant-carrying tubes (20) which are arranged in a hollow space (23) delimited by a side part (21) of the charge air cooler (17), wherein the side part (21) runs along the tube (20),
**characterised in that**
the side part (21) has an extension section (40) extended over the region of the tube (20), on said extension section such an injection moulded section (24) is injection moulded.

2. Fresh air supply device according to claim 1, **characterised in that** the charge air cooler (17) has at least one holding structure (27) for holding the injection moulded section (24), which is injection moulded on the charge air cooler (17), on the charge air cooler (17) in a positive-locking manner.

3. Fresh air supply device according to claim 2,
**characterised in that**
at least one such holding structure (27) forms an indentation (29).

4. Fresh air supply device according to claim 2 or 3,
**characterised in that**
at least one such holding structure (27) is designed as a toothed structure (37).

5. Fresh air supply device according to any one of claims 1 to 4, **characterised in that** the housing (12) has at least one connection section (32) which is connected to at least one such injection moulded section (24).

6. Fresh air supply device according to claim 5, **characterised in that** at least one such injection moulded section (24) has a connection structure (30) for connecting the injection moulded section (24) to at least one such connection section (32).

7. Fresh air supply device according to claim 5 or 6, **characterised in that** at least one such connection section (32), in order to form a gap (43), is arranged spaced from the charge air cooler (17).

8. Fresh air supply device according to any one of claims 1 to 7, **characterised in that** the plastic (25) of at least one such injection moulded section (24) is a thermoplastic elastomer.

9. Fresh air supply device according to any one of claims 1 to 8, **characterised in that** the plastic (25) of at least one such injection moulded section (24) is a thermoplastic or a thermoset.

10. Method for producing a fresh air supply device (11) according to any one of claims 1 to 9, wherein such an injection moulded section (24) is produced by injection moulding plastic (25) onto the extension section (40) of the side part (21).

11. Method according to claim 10, **characterised in that** two such injection moulded sections (24) are injection moulded on the charge air cooler (17) in consecutive injection operations.

12. Method according to claim 11, **characterised in that** such an injection moulded section (32) is connected to the injection moulded section (24) after injection moulding one of the injection moulded sections (24).

13. Method according to claim 11 or 12, **characterised in that** at least one such connection section (32) is connected to at least one such injection moulded section (24) between the injection operations.

## Revendications

1. Dispositif d'alimentation en air frais (11) pour un moteur à combustion interne (2), en particulier d'un véhicule automobile (1),
- avec un refroidisseur d'air de suralimentation (17) pour le refroidissement de l'air frais, que traverse une voie d'air frais (13) de l'air frais,
- avec un boîtier (12) qui entoure le refroidisseur d'air de suralimentation (17) et définit la voie d'air frais (13),
- dans lequel la voie d'air frais (13) s'étend entre une entrée (14) et une sortie (15) du boîtier (12),
- dans lequel le boîtier (12) est fabriqué au moins dans une section d'injection (24) en matière plastique (25) qui est injectée sur le refroidisseur d'air de suralimentation (17),
- dans lequel le refroidisseur d'air de suralimentation (17) présente une pluralité de tubes (20) acheminant un liquide de refroidissement qui sont disposés dans un espace creux (23) délimité par une partie latérale (21) du refroidisseur d'air de suralimentation (17), dans lequel la partie latérale (21) s'étend le long des tubes (20),
**caractérisé en ce**
**que** la partie latérale (21) présente une section de prolongement (40), prolongée au-dessus de la zone des tubes (20), sur laquelle une telle section d'injection (24) est injectée.

2. Dispositif d'alimentation en air frais selon la revendication 1,
**caractérisé en ce**
**que** le refroidisseur d'air de suralimentation (17) présente au moins une structure de maintien (27) pour le maintien à complémentarité de formes de la section d'injection (24), injectée sur le refroidisseur d'air de suralimentation (17), au niveau du refroidisseur d'air de suralimentation (17).

3. Dispositif d'alimentation en air frais selon la revendication 2,
**caractérisé en ce**
**qu'**au moins une telle structure de maintien (27) forme une contre-dépouille (29).

4. Dispositif d'alimentation en air frais selon la revendication 2 ou 3,
**caractérisé en ce**
**qu'**au moins une telle structure de maintien (27) est réalisée comme une structure dentée (37).

5. Dispositif d'alimentation en air frais selon l'une quelconque des revendications 1 à 4,
**caractérisé en ce**
**que** le boîtier (12) présente au moins une section de raccordement (32) qui est raccordée à au moins une telle section d'injection (24).

6. Dispositif d'alimentation en air frais selon la revendication 5,
**caractérisé en ce**
**qu'**au moins une telle section d'injection (24) présente une structure de raccordement (30) pour le raccordement de la section d'injection (24) avec au moins une telle section de raccordement (32).

7. Dispositif d'alimentation en air frais selon la revendication 5 ou 6,
**caractérisé en ce**
**qu'**au moins une telle section de raccordement (32) est disposée pour la réalisation d'un interstice (43) à distance du refroidisseur d'air de suralimentation (17).

8. Dispositif d'alimentation en air frais selon l'une quelconque des revendications 1 à 7,
**caractérisé en ce**
**que** la matière plastique (25) d'au moins une telle section d'injection (24) est un élastomère thermoplastique.

9. Dispositif d'alimentation en air frais selon l'une quelconque des revendications 1 à 8,
**caractérisé en ce**
**que** la matière plastique (25) d'au moins une telle section d'injection (24) est un thermoplaste ou un duroplaste.

10. Procédé de fabrication d'un dispositif d'alimentation en air frais (11) selon l'une quelconque des revendications 1 à 9, dans lequel une telle section d'injection (24) est fabriquée par injection de matière plastique (25) sur la section de prolongement (40) de la partie latérale (21).

11. Procédé selon la revendication 10,
**caractérisé en ce**
**que** deux telles sections d'injection (24) sont injectées, dans des processus d'injection consécutifs, sur le refroidisseur d'air de suralimentation (17).

12. Procédé selon la revendication 11,
**caractérisé en ce**
**qu'**une telle section de raccordement (32) est raccordée, après l'injection d'une des sections d'injection (24), à la section d'injection (24).

13. Procédé selon la revendication 11 ou 12,
**caractérisé en ce**
**qu'**au moins une telle section de raccordement (32) est raccordée, entre les processus d'injection, à au moins une telle section d'injection (24).
